# EUROPEAN PATENT APPLICATION

(11) **EP 1 413 942 A2**
(43) Date of publication of application: **28.04.2004**
(21) Application number: 03256628.3
(22) Date of filing: 21.10.2003
(51) Int. Cl.: G06F 1/00

(54) **Controlled access to software applications and/or data**

(30) Priority: 26.10.2002 GB 0224941
(71) Applicant: NCR INTERNATIONAL INC., Dayton, Ohio 45479 (US)
(72) Inventor: Han, Richard Andrew, Lundie Angus DD2 5NW (GB); Milby, Lynn, Dundee DD1 2AD (GB); Atkinson, Mark, Dundee DD1 4NB (GB)
(74) Representative: Williamson, Brian

(57) **Abstract**

A system (400) for controlling access to or distribution of software and/or data among a plurality of client nodes (401), the system (400) comprising a store (402) for storing software that is to be made available to pre-determined client nodes (401), together with a list (407) of identifiers, each of which uniquely identifies one of the pre-determined nodes, and a client application at each client node (401) that is configured to identify whether the unique identifier (404) for that node (401) is included on the list (407) and install or run the software only if it is.

## Description

The present invention relates to a system and method for controlling access to computer software and/or data for use by such software.

Controlling software licenses is important for protecting revenue. Licenses are often issued on a "per-node" basis where a customer is entitled to use a client software package on a specified number of nodes. There are many models for controlling node-based licensing. For example, for some software, licensors operate on the basis of a fixed number of licences. In this case, either a fixed number of specific nodes are allowed to use the software or alternatively a fixed number of potentially changing nodes are allowed to use it. However, most licence models impose a significant administration burden on the licensor. This is particularly true when a licensee wishes to increase the number of licences it has or transfer existing licenses between different terminals or where the licensor wishes to up-date the software. In addition, many existing solutions can only be used where the client terminals are connected via a network to a central controller, such as a server. Furthermore, some solutions require additional hardware, such as dongles, for their implementation.

Licence control issues are particularly important in distributed systems that have a large number of client nodes, such as self-service terminals, and in particular automated teller machines (ATMs). Typically a service provider, such as a bank, has a plurality of such terminals distributed around the country. Because of the distributed nature of these machines, keeping track of new software can be problematic for the licence holder. For ATMs that are connected via a network, these problems can impose a maintenance burden for the licensor and the licensee, but this is more acute for groups of terminals that are not networked.

An object of the invention is to provide an improved system and method for controlling the distribution of software around a plurality of terminals.

According to a first aspect of the invention, there is provided a system for controlling access to or distribution of software and/or data among a plurality of client nodes, the system comprising:
means for storing software and/or data that is to be made available to pre-determined client nodes, and a list of identifiers, each of which uniquely identifies one of the pre-determined nodes, and
a client application at each client node that is configured to identify whether the unique identifier for that node is included on the list and install or run or use the software and/or data only if it is.

By providing a client application that identifies whether or not it is authorised before attempting to install or run or use software and/or data, there is provided a very simple and effective mechanism for controlling access to that software and/or data. The client application is adapted to ensure that the software and/or data can only be accessed if the unique identifier for the corresponding client node is included on the authorised list. In the event that the identifier is not included on the list, the client application is not able to install or run the software. In contrast, if the identifier is on the list, the client application can install/run the software.

The means for storing the software and/or data and the unique client identifiers may be a single information storage area or may comprise a distributed memory storage structure.

The means for storing may be portable, for example a CD or a floppy disc, sometimes referred to as "sneakerware". An advantage of this is that the distribution of software among standalone client nodes can be controlled. A plurality of discs may be provided, each of which includes a copy of the software and/or data that is to be distributed as well as the list of identifiers.Alternatively, where the client nodes are part of a communications network, the means for storing may be provided in a shared information storage area that can be remotely accessed by all of the client nodes. Multiple shared information storage areas may be provided, each including a copy of the software and/or data that is to be distributed, together with a copy of the list of authorised nodes.

The client application may be operable to generate a unique identifier for its host node and compare this with the unique identifiers on the authorised list, thereby to identify whether the unique identifier for that node is on the list. Preferably, the client application uses node specific data to generate the unique identifier.

The client application may be permanently resident on the client node or may be provided separately when needed to install or run or use new software and/or data. The client application may be provided together with the new software and/or data.

According to another aspect of the invention, there is provided a method for controlling access to or distribution of software and/or data among a plurality of client nodes, the method comprising:
storing in association with the software and/or data, a list of unique identifiers, each of which uniquely identifies one of the pre-determined nodes;
identifying whether a unique identifier for a particular node is included on the list, and
loading or installing or using the software and/or data at that particular node only if its unique identifier is on the list.

According to still another aspect of the invention, there is provided a computer program, preferably on a data carrier or computer readable medium, the computer program having code or instructions for:
identifying a unique identifier associated with its host terminal;
reading a list of unique identifiers associated with software and/or data, each unique identifier being uniquely associated with one of a plurality of client nodes or terminals; and
loading or installing or using the software and/or data only if the unique identifier for the host node or terminal is on the list of unique identifiers.

According to yet another aspect of the invention, there is provided a client node or terminal, such as a self service terminal, for example an automated teller machine, configured to:
read a list of unique identifiers associated with software and/or data, each unique identifier being uniquely associated with one of a plurality of client nodes or terminals; and
load or install or use the software and/or data only if its own unique identifier is on the list of unique identifiers.

Various aspects of the invention will now be described by way of example only and with reference to the accompanying drawings, of which:
Figure 1 is a flow diagram showing the steps for authorising a client node or terminal;
Figure 2 is a flow diagram showing the steps for executing an application on an authorised terminal;
Figure 3 is a block diagram of a first system for controlling access to certain software applications, and
Figure 4 is a block diagram of another system for controlling access to certain software application.

The present invention relates to an arrangement for controlling the distribution of software and/or data from a central server around a network of client nodes or terminals. By software, it is generally meant any executable functionality. By data, it is generally meant any content, i.e. presented data, or other, non-presented data. To ensure that a licensee has control over software and/or data introduced into the network, two key processes are implemented: client authorisation and client application execution.

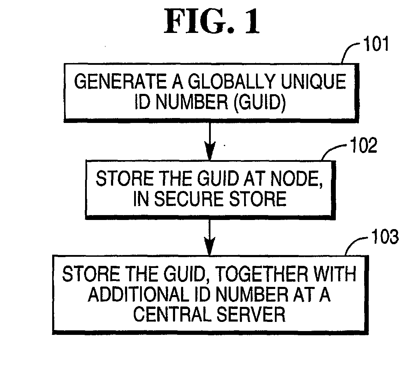

Figure 1 shows the steps that are taken to authorise each client in the network. Client authorisation is controlled by a license management program, which is firstly executed in a client node to generate 101 a globally unique identifier (GUID) associated with that node. The licence management program is adapted to cause the GUID to be stored 102 in a private place on the client node. The license management program additionally records the GUID alongside some appropriate identification (ID) information for the client node. The ID can be provided by a human or gathered automatically from the client node. Examples of a suitable ID include: a human-generated node name or identifier; an IP network address/network card MAC address; and a checksum of key hardware elements at the node. The ID is used to identify the client node at the server and so should preferably be a meaningful string of characters. Once the ID is generated at the client node, the license management program is executed in the server and adds the client information (GUID + ID) into a client authorisation database in the server application 103. When this is done, the node is authorised.

Once a client node is authorised, software can be distributed thereto in a controlled manner. To ensure that only authorised nodes can access this, all new software is provided together with a list of unique identifiers for the authorised nodes. In addition, each client node is provided with a client application that has to be run in order to install or run new software. The client application can be provided in the node itself or delivered with the new software. In either case, the client application is specifically configured to access the new software and/or data only if the unique identifier for its host node is included in the list of authorised nodes for the new software. If the unique identifier is not on the list, the client application does not enable loading or running of the new software.

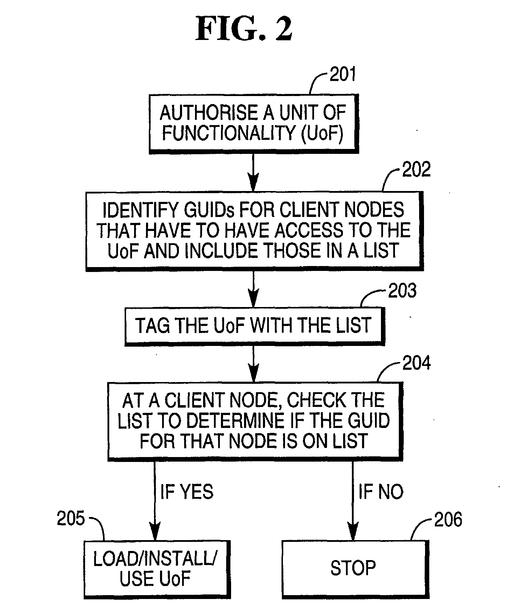

Figure 2 shows the steps that are taken when client terminals are to be provided with new software or functionality. As a first step, the server application authorises some software and/or data, which will be referred to as a unit of functionality (UoF) for a list of pre-determined nodes 201. A UoF might be a service, a one-off data packet, or any other server-related unit. The server then identifies 202 the client node GUID for each of the nodes that are authorised. The UoF is tagged 203 with a list of the GUIDs for its authorised clients. In order to access the UoF, the client application checks its own GUID and compares it with the GUIDs in the list 204, thereby to see if it is authorised. If it is, it can access the UoF 205. If not, the client application prevents access to the UoF 206. By maintaining a list of valid clients (GUIDS) for each UoF, only authorised client nodes can access server functionality. In this way, there is provided a very simple and effective mechanism for controlling the distribution of software among nodes of a network.

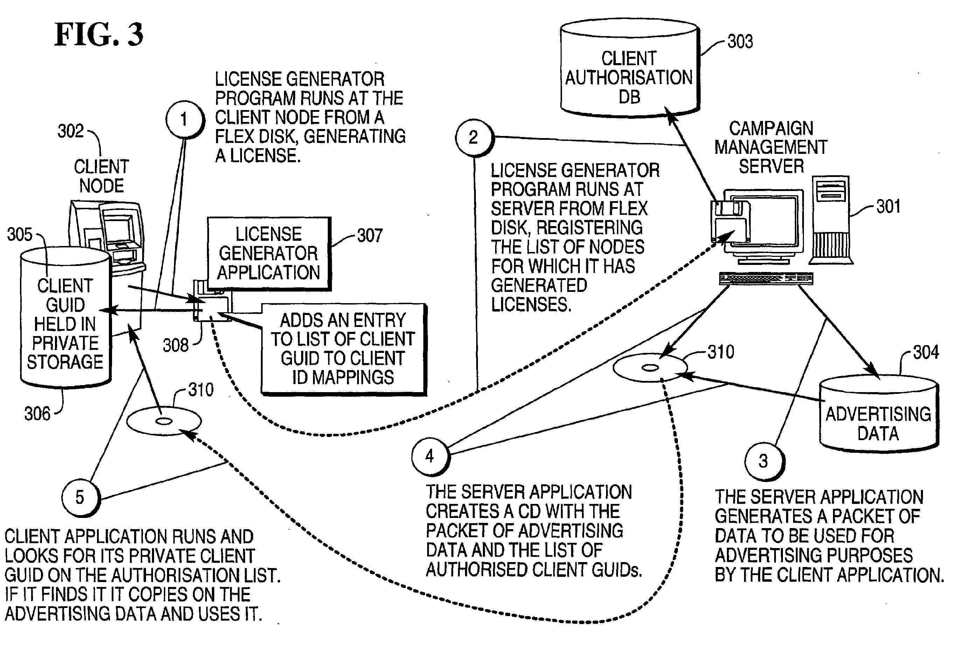

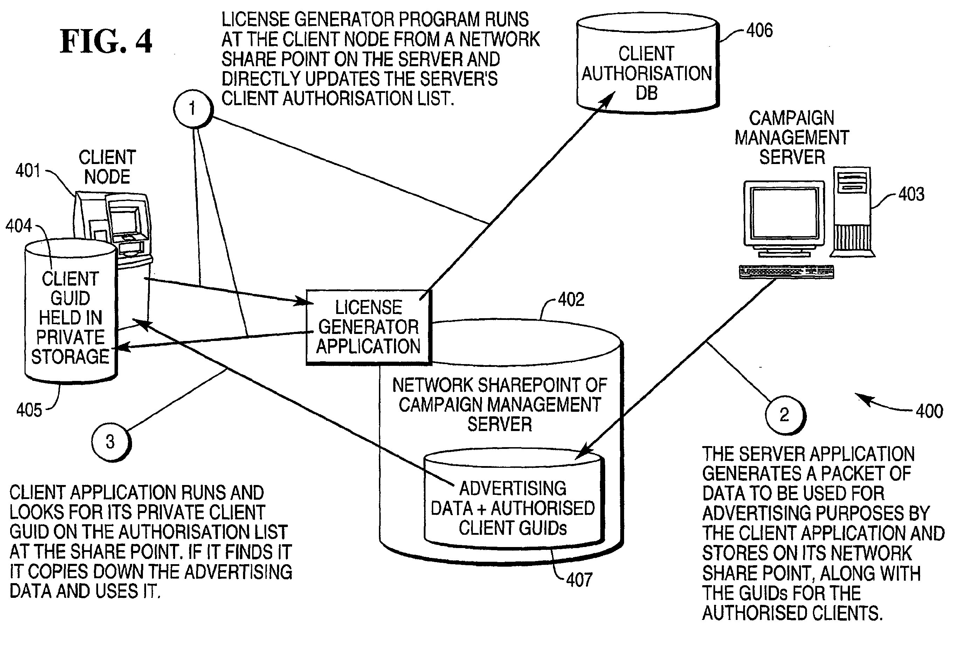

The software distribution method described above can be implemented in various different environments, for example it can be implemented in a group of client nodes that are connected to a central server or alternatively in a group of standalone, self-contained client nodes. Figure 3 shows a system for controlling advertising software that is to be used in a plurality of standalone client nodes. Figure 4 shows a similar system, but in which the client nodes are connected via a network to a central server.

The system of Figure 3 has a campaign management server 301 that includes a license management program for authorising a client node 302, in this case an ATM, and up-dating and maintaining a client authorisation database 303. Also provided is a server application for servicing only authorised client nodes. In particular, the server application is operable to use data in an advertising database 304 for generating a packet of data that is to be used for advertising purposes by a client application.

Remote from the management server is a plurality of client nodes. For the sake of clarity only one node 301 is shown in Figure 3. Provided at each node 301 is a processor (not shown) and a client application. Associated with each client node 301 is a unique identifier 305, which is stored in a secure part 306 of the node and accessible by the client application. This unique identifier is generated when the node is initialised. This is done using a licence generator application 307 that is provided on a floppy disc 308. The licence generator application 307 is run at the client node 302 to generate a globally unique identifier (GUID) . This can be done using specific information associated with that node 302. This GUID is stored both at the client node 302 and on the licence generator disc 308. Once a GUID is stored on the generator disc, a licence for that node is regarded as being generated. The licence generator program has to be run on all nodes in the network for which a licence is desired, thereby to ensure that unique numbers for each of these are generated and stored for later use in the distribution process.

Once client node information is included on the licence generator disc 308, the disc 308 is returned to the server, where the licence generator program is run to register the client nodes 302 for which it has generated licences. Alternatively, the information on the disc 308 could be returned to the server 301 via e-mail or some other electronic transport mechanism. Client information, including the unique identifier, stored on the licence generator disc is provided to the server management application and the relevant client details are added to the client authorisation database 303.

When new software and/or content is to be installed on selected ones of the plurality of nodes, the server application either identifies the software and/or content from an information storage location or may create or generate the software or content. As a specific example, the server may generate a packet of data, for example a packet of data to be used for advertising purposes by the client applications. This packet of data is stored on a CD or other suitable disc, together with a list of the unique identifiers for the selected nodes. The CD is then manually taken round the network by, for example, a service engineer and loaded into appropriate drives in the client nodes. Of course, a plurality of CDs could be provided, each carrying a copy of the data and the list of authorised nodes.

Once the CD 310 is loaded into a client node 302, the client application at that node 302 reads the list of unique numbers and compares them to the number associated with its host node. In the event that the client node's identifier 305 is not on the list, the client application is prevented from opening the data packet provided by the server. In contrast, if the client node's identifier is on the list, the client application is configured to open the data packet, copy it and use it to present the new advertising information. In this way, the client application in effect acts as a gatekeeper, allowing software to be installed only if the node on which the client application is resident is one of a list of authorised nodes.

Figure 4 shows an arrangement that can be used when a network is available to connect together a plurality of nodes 401 at remote locations. In this case, rather than providing the licence generator software on a floppy disc, it is provided in a shared part 402 of the campaign management server 403, which shared part 402 can be accessed by each of the client nodes 401. To register, the licence generator program is run at the client node from the network share point 402. As before, the licence generator program identifies or generates a unique number 404 for each node 401 that is to be authorised. The licence generator causes this unique identifier 404 to be stored in a private part 405 of the client node 401, as well as in a client authorisation database 406 that is stored in the shared part 402 of the campaign management server 403. Once the node 401 is authorised, new software can be distributed to it in a controlled manner.

When new software is to be installed on selected ones of the plurality of nodes 401, the server either identifies the software and/or content from an information storage location or may create or generate that software or content. As a specific example, the server application may generate a packet of data, for example a packet of data to be used for advertising purposes by the client applications. This packet of data is stored on the shared part 402 of the server 403, together with a list of the unique identifiers for the authorised nodes. Each client node 401 may be notified of the new software, and configured to respond to this notification by interrogating the server to identify whether it is authorised to use it. Alternatively, the client applications may be configured to periodically poll the shared part 402 of the server 403 to check whether new software is available. As a further alternative, the packet of data, together with the list, may be downloaded directly to each node. In any case, once the client application becomes aware of the new software, it accesses the location where it is stored and reads the accompanying or associated list 407 of unique numbers. It then compares the numbers in the list to the number associated with its host node. In the event that the client node's identifier 404 is not on the list, the client application is prevented from opening the data packet provided on the server. In contrast, if the client node's identifier is on the list, the client application is configured to open the data packet and use it to present the new advertising information.

Many licensing models can be supported by the system of Figure 4. For example a server-controlled floating license model can be used. In this, the server 403 maintains a large (possibly unrestricted) list of authorised nodes (GUIDs + IDs). The server 403 restricts authorisation of UoFs to a fixed number of client nodes 401, for example 1000. This means that only 1000 nodes are able to access any particular UoF. Control over which nodes are currently authorised lies at the server 404, but may be placed under customer control. The total number of nodes that a server can authorise for a given client UoF may be varied as and when desired. This process can be managed using conventional methods, for example, by issuing a unique licence code associated with the client server, this code setting the number of client nodes that the server can authorise for a given UoF. In order to change the number of nodes authorised to use the UoF all that has to be done by the licensor is to issue a new code that allows the client to access each UoF on more nodes than was previously allowed.

To allow customers to control which nodes in their network can be licensed, the server is adapted to provide a graphical user interface (not shown) that allows each customer to view and, if desired, change the nodes that are authorised for specific UoFs. This could be done by presenting to a customer a list of the IDs for authorised nodes for the UoF of interest and providing means, for example, a drop down list of the IDs for all nodes in the customer's network, for allowing the customer to add nodes to the authorised list. It should be noted that the IDs are presented to the client, and not the GUIDs, because the IDs are in a human readable format and can be used to allow a client to easily identify particular nodes. Once the client has made changes, the system is adapted to up-date the list of GUIDs to take these changes into account.

The user interface may also be adapted to allow customers to remove nodes from the authorised list. Hence, in the event that the customer wishes to change the terminals that are authorised, all that has to be done is to remove the ID of one terminal on the list and replace it with the ID for another terminal. The system then automatically makes the corresponding changes to the list of GUIDs for the authorised nodes. Hence, the next time the client application for the removed terminal tries to access the UoF, it is unable to do so because its GUID is no longer on the authorised list. In contrast, the next time the client application for the newly included terminal tries to access the UoF, it is able to load or run or use the software. In this way, a very simple mechanism is provided for transferring licences between different terminals 401.

In another licence model that can be supported using the system of Figure 4, a first-come first served floating license arrangement could be used. In this, the server restricts access to the first 'n' clients by recording each client application GUID and preventing access after the limit has been reached.

Regardless of the licensing approach taken, the arrangement of Figure 4 has numerous advantageous characteristics. For example, nodes 401 can be readily added and removed from the server authorisation list at any time so long as the total number of authorised nodes does not exceed the fixed limit (if it exists). This allows the customer to handle various different situations. For example, when a client node ceases to exist and the customer wishes the license to be re-cycled, this can be done centrally, for example using the user interface and merely removing the ID of the old node and replacing it with the ID of the new node. The server then automatically up-dates the list of GUIDs for the authorised nodes to take into account these changes. Likewise, when a client node is reconfigured, such that it requires re-authorisation, this can be done simply by generating a new GUID. Another situation that often arises is that a client node license is shared by several clients and needs to be transferred periodically between those clients. Again, this can be readily and simply achieved merely by changing the IDs presented in the user interface and then automatically up-dating the GUIDs in the list of authorised terminals to take these changes into account. This could be done on a time-automated basis. For example, the system could be set up to authorise one terminal to use the UoF at, say, the weekend and another could be authorised to use the UoF on Monday to Friday.

Where customers have direct access to the lists of authorised terminals, this means that there is no need for the vendor to actively manage the licenses issued to the customer. The customer is responsible for doing this. This removes a significant administration burden from the licensor and makes the overall system more flexible and easier for customers to use. In addition, if the nodes are connected by a suitable network to the server, the job of managing the authorisation of client nodes can be automated.

As with all software licence control schemes, the system in which the invention is embodied may be susceptible to fraud. Primary attacks on the system are those that create more than one client with the same Client GUID. In other words, the GUID is not globally unique. For example, the SST hard disk could be duplicated and the client GUID could be copied to another client node. There are two simple approaches to preventing this. Firstly, the client application may be operable to construct the GUID each time authorisation is needed, using reasonably unique hardware -related information as a seed or prefix, e.g., motherboard information, hard disk serial number, etc. In this case, every time the client application tries to execute new software, it firstly has to identify, for example, the hard disk serial number and then use this to generate the GUID. This means that if the hard disk serial number changes, the GUID generated does not correspond to a GUID on the list of authorised nodes. Because of this, if the hardware changes the client needs to be re-licensed. Alternatively, the client GUID could be stored in a location other than the hard disk, such as the motherboard CMOS or proprietary local storage. Hence, copying the hard disk would not compromise the integrity of the GUID.

Another possible attack is reverse engineering the location of the Client GUID. This breaks protection by allowing the same client GUID to be written to that location on all clients. This can be made difficult using steganographic techniques to hide the location of the GUID.

Yet another possible attack involves adding new client GUIDs to the UoF. This breaks protection by authorising unlicensed clients. To limit the risk of this happening, the list of clients associated with the UoF must be protected using a tamper-resistance technique such as digital signing.

The systems and methods in which the present invention is embodied allow a server-controlled floating client license scheme to be employed in environments where there may or may not be a network connection available from the client to the server. A network connection is advantageous (allowing client license management to be automated) but not required. In addition, there is no administrative overhead placed on the software vendor with respect to client license management. The customer can have complete control over issuing, managing and recycling client licenses.

Various advantages are provided by the systems and methods in which the invention is embodied. For example the method works effectively in an unconnected environment where the only transfer method is "sneakerware". Equally, the method can be adapted for use in a network and can take advantage of the network connections to automate the license management process. The methodology also allows the customer to move licenses between nodes without involving the vendor and can cater for hardware upgrades that make the licensed client nodes appear as "new unlicensed nodes" to most license technology. The system can also support both concurrent (floating) and total (fixed) licensing models and requires no additional hardware (i.e., dongles). Copy protection for software or license-related media such as floppy disks or CDROMs is not needed. Therefore, overall the licensing functionality described above fits well with the requirements of a typical Self-Service network.

In each of the examples described above, it should be noted that there is no limit on the number of client nodes that can be used. There is also no limit on the number of times a single client can be re-issued with new client information (GUID + ID). This means that new, re-built or replaced client nodes do not require the customer to contact the vendor to update their licensed nodes. This is an improvement over current fixed-node (hardware-tied) licenses that are common when there is no network available.

A skilled person will appreciate that variations of the disclosed arrangements are possible without departing from the invention. Accordingly, the above description of a specific embodiment is made by way of example only and not for the purposes of limitation. It will be clear to the skilled person that minor modifications may be made without significant changes to the operation described.

## Claims

1. A system for controlling access to or distribution of software and/or data among a plurality of client nodes, the system comprising:
means for storing software and/or data that is to be made available to pre-determined client nodes, and a list of identifiers, each of which uniquely identifies one of the pre-determined nodes, and
a client application at each client node that is configured to identify whether the unique identifier for that node is included on the list and allow access to the software and/or data only if it is.

2. A system as claimed in claim 1, wherein the means for storing the software and/or data and unique client identifiers is portable, for example a CD or a floppy disc.

3. A system as claimed in claim 1, wherein the client nodes are part of a communications network.

4. A system as claimed in claim 3, wherein the means for storing is provided in a shared information storage area that can be remotely accessed by at least some or all of the client nodes.

5. A system as claimed in any of the preceding claims, wherein the client application is operable to generate a unique identifier for its host node and compare this with the unique identifiers on the authorised list, thereby to identify whether the unique identifier for that node is on the list.

6. A system as claimed in claim 5, wherein the client application uses node specific data to generate the unique identifier.

7. A method for controlling access to or distribution of software and/or data among a plurality of client nodes, the method comprising:
storing in association with the software and/or data, a list of unique identifiers, each of which uniquely identifies one of the pre-determined nodes;
identifying whether a unique identifier for a particular node is included on the list, and
loading or installing or using the software and/or data at that particular node only if its unique identifier is on the list.

8. A computer program, preferably on a data carrier or computer readable medium, the computer program having code or instructions for:
identifying a unique identifier associated with its host terminal;
reading a list of unique identifiers associated with software and/or data, each unique identifier being uniquely associated with one of a plurality of client nodes or terminals; and
allowing access to the software and/or data only if the unique identifier for the host node or terminal is on the list of unique identifiers.

9. A computer program as claimed in claim 8, having code or instructions for generating a unique identifier for its host node and comparing this with the unique identifiers on the authorised list, thereby to identify whether the unique identifier for that node is on the list.

10. A computer program as claimed in claim 9, wherein node specific data is used to generate the unique identifier.

11. A client node or terminal, such as a self service terminal, for example an automated teller machine, configured to:
read a list of unique identifiers associated with software and/or data, each unique identifier being uniquely associated with one of a plurality of client nodes or terminals; and
load or install or use the software and/or data only if its own unique identifier is on the list of unique identifiers.

12. A client node or terminal as claimed in claim 11 that is configured to: generate a unique identifier for its host node and compare this with the unique identifiers on the authorised list, thereby to identify whether the unique identifier for that node is on the list.

13. A client node or terminal as claimed in claim 12, wherein node specific data is used to generate the unique identifier.

14. A system substantially as described hereinbefore with reference to the accompanying drawings and as shown in Figure 1 or Figure 2.

15. A method substantially as described hereinbefore with reference to the accompanying drawings.

16. A computer program substantially as described hereinbefore with reference to the accompanying drawings.

17. A node or terminal, such as an automated teller machine, substantially as described hereinbefore with reference to the accompanying drawings.
